# EUROPÄISCHE PATENTANMELDUNG

(11) **EP 1 788 314 A1**
(43) Veröffentlichungstag der Anmeldung: **23.05.2007**
(21) Anmeldenummer: 06450150.5
(22) Anmeldetag: 23.10.2006
(51) Int. Cl.: F24D 11/00, F24D 19/10

(54) **Heizungsanlage mit mindestens einer Wärmequelle**

(30) Priorität: 17.11.2005 AT 18722005
(71) Anmelder: Schwarz, Alois, A-6382 Kirchdorf in Tirol (AT)
(72) Erfinder: Schwarz, Alois, A-6382 Kirchdorf in Tirol (AT)
(74) Vertreter: Atzwanger, Richard

(57) **Zusammenfassung**

Heizungsanlage mit mindestens einer Wärmequelle, wie einem Wärmekollektor [10], einem Heizkessel [20] oder einem Erdspeicher, mit mindestens einem Verbraucher [5] an Wärmeenergie, insbesondere einer Boden-, Wand- oder Deckenheizung, und mit mindestens einer Förderpumpe (42), durch welche ein Trägermedium für die Wärmeenergie, insbesondere Wasser, von der Wärmequelle (10, 20) zu dem mindestens einen Verbraucher [5] an Wärmeenergie gefördert wird. Dabei sind der zum Verbraucher [5] an Wärmeenergie führenden Leitung (41) und der vom Verbraucher (5) an Wärmeenergie wegführenden Leitung (45) je ein Temperatursensor (43, 46) zugeordnet, durch welche beiden Temperatursensoren (43, 46) die Temperaturen des Trägermediums in diesen beiden Leitungen [41, 45] erfasst werden und deren Ausgangsleitungen an eine Steuereinheit (48) gelegt sind, durch welche die Förderleistung der Förderpumpe (42) so gesteuert wird, dass die Differenz der Temperaturen des Trägermediums in der zu dem mindestens einen Verbraucher (5) führenden Leitung [41] und in der vom Verbraucher [5] wegführenden Leitung [45] auf einem vorgegebenen maximalen Wert von z.B. 2°C bis 3°C gehalten wird [Fig. 1].

## Beschreibung

Die gegenständliche Erfindung betrifft eine Heizungsanlage mit mindestens einer Wärmequelle, wie einem Wärmekollektor, einem Heizkessel oder einem Erdspeicher, mit mindestens einem Verbraucher an Wärmeenergie, wie einer Boden-, Wand- oder Deckenheizung, und mit mindestens einer Förderpumpe, durch welche ein Trägermedium für die Wärmeenergie, insbesondere Wasser, von der Wärmequelle zu dem mindestens einen Verbraucher an Wärmeenergie gefördert wird.

Bekannte derartige Heizungsanlagen weisen eine Förderpumpe auf, mittels welcher das Trägermedium von der Wärmequelle zu dem mindestens einen Verbraucher an Wärmeenergie gefördert wird. Dabei wird die Temperatur des zum Verbraucher strömenden Trägermediums auf einen vorgegebenen Wert, welcher insbesondere auch in Abhängigkeit von der Außentemperatur gewählt wird, eingestellt und wird die Förderpumpe dann eingeschaltet, sofern von einem Temperatursensor angezeigt wird, dass die Temperatur in demjenigen Raum, welcher beheizt werden soll, unter einen gleichfalls vorgegebenen Wert abgesunken ist. Die Förderpumpe fördert dabei pro Zeiteinheit immer die gleiche Menge an Trägermedium.

Sofern ein Objekt mittels einer Boden-, Wand- oder Deckenheizung beheizt wird, besteht das Erfordernis, eine niedrige Vorlauftemperatur von z.B. 25 ° C vorzusehen, da andernfalls ein ungünstiges Raumklima entsteht. Bei einer derartigen Temperatur des zum Verbraucher strömenden Trägermediums weist die Temperatur des rückströmenden Trägermediums einen um etwa 2°C bis 3°C geringeren Wert auf. Eine niedrige Temperatur des zum Verbraucher strömenden Trägermediums ist deshalb vorteilhaft, da ein Trägermedium mit einem niedrigen Temperaturwert eingesetzt werden kann. Somit kann durch Umweltkollektoren oder durch Erdspeicher erwärmtes Trägermedium insbesondere für diese Arten von Raumheizungen verwendet werden, wodurch keine durch Brennstoffe auf hohe Temperaturen erwärmte Trägermedien erforderlich sind.

Der gegenständlichen Erfindung liegt die Aufgabe zugrunde, eine Heizungsanlage zu schaffen, durch welche gewährleistet wird, dass die Differenz der Temperaturen des Trägermediums in der zu dem mindestens einen Verbraucher an Wärmeenergie führenden Leitung und des Trägermediums in der vom Verbraucher zurückführenden Leitung einen vorgegebenen Wert von etwa 2°C bis 3°C nicht überschreitet, um hierdurch den Erfordernissen einer Heizungsanlage in Bezug auf den Verbrauch an Wärmeenergie, auf ein gutes Raumklima sowie eine gleichmäßige Flächenheizung und auf eine geringe Schalthäufigkeit zu entsprechen.

Dies wird erfindungsgemäß dadurch erzielt, dass der zum Verbraucher an Wärmeenergie führenden Leitung und der vom Verbraucher an Wärmeenergie wegführenden Leitung je ein Temperatursensor zugeordnet sind, durch welche beiden Temperatursensoren die Temperaturen des Trägermediums in diesen beiden Leitungen erfasst werden und deren Ausgangsleitungen an eine Steuereinheit gelegt sind, durch welche die Förderleistung der Förderpumpe so gesteuert wird, dass die Differenz der Temperaturen des Trägermediums in der zu dem mindestens einen Verbraucher führenden Leitung und in der vom Verbraucher wegführenden Leitung auf einem vorgegebenen maximalen Wert von z.B. 2 ° C bis 3° C gehalten wird.

Vorzugsweise ist weiters im Leitungskreis für den mindestens einen Verbraucher an Wärmeenergie ein Mehrwegeventil vorgesehen, durch welches dem Leitungskreis für den Verbraucher von der Wärmequelle her ein Trägermedium zuführbar ist. Weiters ist vorzugsweise dem Leitungskreis für den mindestens einen Verbraucher an Wärmeenergie eine zweite Steuereinheit zugeordnet, an welche die Ausgänge eines weiteren der Vorlaufleitung zugeordneten Temperatursensors und eines Außentemperatursensors gelegt sind, wobei ein Ausgang dieser zweiten Steuereinheit an eine dem Mehrwegeventil zugeordnete Stelleinrichtung gelegt ist. Zudem kann ein Ausgang der zweiten Steuereinrichtung auch an eine in der von der Wärmequelle wegführenden Leitung vorgesehene weitere Pumpe gelegt sein.

Vorzugsweise ist weiters im Leitungskreis des mindestens einen Verbrauchers an Wärmeenergie ein Mengenmessgerät vorgesehen, dessen Ausgang gleichfalls an die erste Steuereinrichtung gelegt ist. Zudem kann zwischen der Wärmequelle und dem Leitungskreis für den mindestens einen Verbraucher an Wärmeenergie ein Speicher für das Trägermedium vorgesehen sein. Nach einer weiters bevorzugten Ausführungsform ist der Leitungskreis des Umweltkollektors an einen dem Speicher für das Trägermedium zugeordneten Wärmetauscher angeschlossen. Weiters können den zur Wärmequelle und von dieser wegführenden Leitungen jeweils ein Temperatursensor zugeordnet sein, wobei die Ausgänge dieser Temperatursensoren an eine dritte Steuereinheit gelegt sind, durch welche eine in diesem Leitungskreis befindliche Förderpumpe derart gesteuert wird, dass die Differenz der Temperaturen des Trägermediums in der zur Wärmequelle führenden Leitung und in der von der Wärmequelle wegführenden Leitung einen vorgegebenen minimalen Wert von etwa 20 ° C bis 30 ° C beträgt.

Vorzugsweise ist im Leitungskreis der Wärmequelle ein Mengenmessgerät vorgesehen, dessen Ausgangsleitung gleichfalls an die dritte Steuereinheit gelegt ist. Zudem kann im Speicher ein Boiler für die Erzeugung von erwärmtem Brauchwasser vorgesehen sein.

Eine erfindungsgemäße Heizungsanlage ist nachstehend anhand eines in der Zeichnung dargestellten Ausführungsbeispiels näher erläutert. Es zeigt:

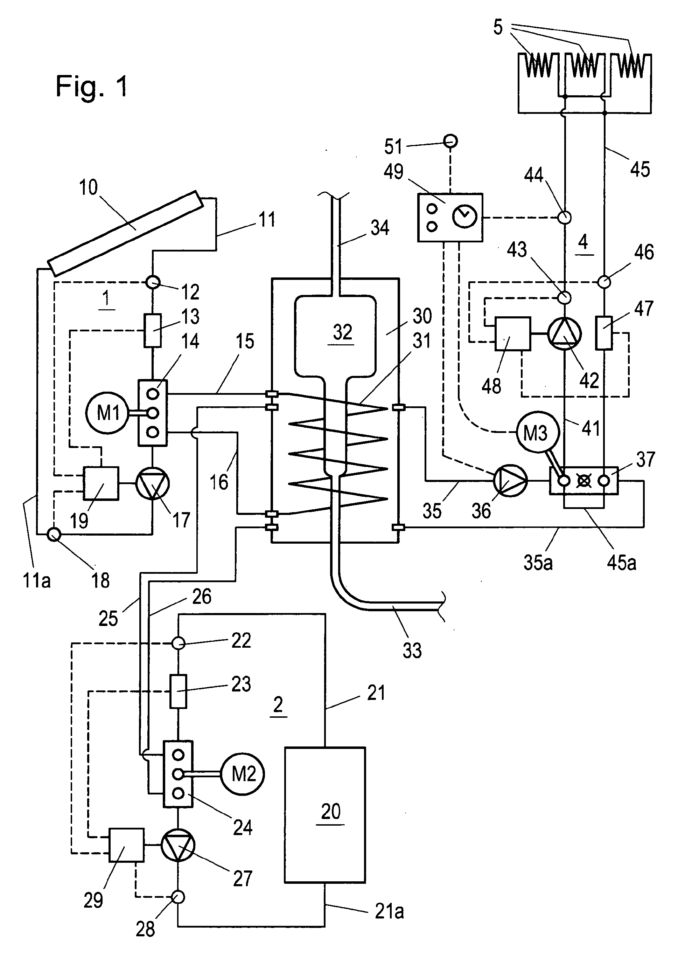

- Fig.1: eine erfindungsgemäße Heizungsanlage in schematischer Darstellung.

Die in Fig.1 dargestellte Heizungsanlage weist zwei erste Leitungskreise 1 und 2 auf, in welchen ein Trägermedium, insbesondere Wasser, erwärmt wird.
Der erste Leitungskreis 1 enthält einen Wärmekollektor 10, von welchem eine Leitung 11 abgeht und in welcher sich ein erster Temperatursensor 12, ein Mengenmessgerät 13 und ein durch einen Stellmotor M1 gesteuertes Mehrwegeventil 14 befinden. Vom Mehrwegeventil 14 geht eine Leitung 11a ab, in welcher sich eine Förderpumpe 17 und ein zweiter Wärmesensor 18 befinden und welche zum Umweltkollektor 10 zurückführt. Weiters ist eine Steuereinheit 19 vorgesehen, an welche die Ausgänge der Temperatursensoren 12 und 18 sowie des Mengenmessgerätes 13 gelegt sind. Das Mehrwegeventil 14 ist über Leitungen 15 und 16 an einen Pufferspeicher 30 für das Trägermedium angeschlossen.

Der zweite Leitungskreis 2 weist einen Heizkessel 20 auf, von welchem eine Leitung 21 abgeht, in welcher sich gleichfalls ein erster Temperatursensor 22, ein Mengenmessgerät 23 und ein durch einen Stellmotor M2 gesteuertes Mehrwegeventil 24 befinden. Vom Mehrwegeventil 24 geht eine Leitung 21a ab, in welcher sich eine Förderpumpe 27 und ein zweiter Temperatursensor 28 befinden und welche zum Heizkessel 20 zurückführt. Weiters ist eine Steuereinheit 29 vorgesehen, an welche die Ausgänge der Temperatursensoren 22 und 28 sowie des Mengenmessgerätes 23 gelegt sind. Das Mehrwegeventil 24 ist über Leitungen 25 und 26 gleichfalls an den Pufferspeicher 30 angeschlossen.

Im Pufferspeicher 30 befindet sich eine an die Leitungen 15 und 16 angeschlossene Rohrleitung 31, welche als Wärmetauscher dient. Im Pufferspeicher 30 befindet sich weiters ein Boiler 32, an welchen Leitungen 33 und 34 angeschlossen sind. Vom Pufferspeicher 30 geht eine Leitung 35 ab, welche zu einer Druckpumpe 36 und zu einem weiteren durch einen Stellmotor M3 gesteuerten Mehrwegeventil 37 führt, wobei eine vom Mehrwegeventil 37 abgehende Leitung 35a zum Pufferspeicher 30 zurückführt.

Das Mehrwegeventil 37 befindet sich in einem dritten Leitungskreis 4, welcher aus einer vom Mehrwegeventil 37 zu mindestens einem Verbraucher 5 an Wärmeenergie führenden Leitung 41 mit einer Förderpumpe 42 und mit zwei Temperatursensoren 43 sowie 44 und aus einer von dem mindestens einen Verbraucher 5 zum Mehrwegeventil 37 zurück führenden Leitung 45 besteht, wobei sich in der Leitung 45 ein weiterer Temperatursensor 46 und ein Mengenmessgerät 47 befinden. Die Ausgänge der Temperatursensoren 43 und 46 sowie des Mengenmessgerätes 47 sind an eine weitere Steuereinheit 48 gelegt, durch welche die Förderpumpe 42 gesteuert wird. Weiters sind die Ausgänge des Temperatursensors 44 und eines Außentemperatursensors 51 an eine weitere Steuereinheit 49 gelegt, durch welche ein Antriebsmotor M3 des Mehrwegeventils 37 und die Druckpumpe 36 gesteuert werden. Die Leitungen 41 und 45 sind über das Mehrwegeventil 37 durch eine weitere Leitung 45a miteinander verbunden.

Die Mehrwegeventile 14, 24 und 37 weisen denjenigen Aufbau auf, welcher aus der W02004/088186 A1 bekannt ist. Dieses Mehrwegeventil weist einen Längskanal und zwei diesen räumlich kreuzende Querkanäle auf, wobei es mit sechs Anschlüssen ausgebildet ist. Dabei sind die Querkanäle mit dem Längskanal über jeweils ein Ventil enthaltende Verbindungskanäle verbunden und ist weiters im Längskanal zwischen den Anschlüssen der Verbindungskanäle ein weiteres Ventil vorgesehen.

Bei den Mehrwegeventilen 14 und 24 befindet sich im Längskanal ein mittels der Stellmotoren M1 und M2 steuerbares Sperrventil und befindet sich im jeweiligen Verbindungskanal zwischen den Leitungen 11 und 15 bzw. 21 und 25 jeweils ein federbelastetes Rückschlagventil, wogegen sich im jeweils anderen Verbindungskanal kein Ventil befindet.
Beim Mehrwegeventil 37 befindet sich zwischen den Leitungen 35 und 41 ein mittels des Stellmotors M3 gesteuertes Regelventil und befindet sich im Längskanal ein Sperrventil, welches immer geschlossen ist. Weiters sind die an die Querkanäle anschließenden Leitungen 41 und 45 über die Leitung 45a miteinander verbunden.

Die Funktion dieser Heizungsanlage ist wie folgt:
Im ersten Leitungskreis 1 wird durch den Umweltkollektor 10 gewonnene Wärmeenergie über die Leitung 11, das Mehrwegeventil 14 und die Leitung 15 in den im Pufferspeicher 30 befindlichen Wärmetauscher 31 geleitet, wodurch sie im Pufferspeicher 30 gespeichert wird. Der Rücklauf vom Wärmetauscher 31 erfolgt über die Leitung 16, das Mehrwegeventil 14 und die Leitung 11a zum Wärmekollektor 10, wobei die Förderung durch die Förderpumpe 17 bewirkt wird.

Um einen hohen Wirkungsgrad des Umweltkollektors 10 zu erzielen, wird angestrebt, dass die Differenz der Temperatur des zwischen dem vom Kollektor 10 über die Leitung 11 abströmenden Trägermediums und der Temperatur des in der Leitung 11a zum Kollektor 10 zurück strömenden Medium mindestens 20°C bis 30°C beträgt. Um dies in Abhängigkeit von der dem Umweltkollektor 10 zur Verfügung stehenden Umweltenergie zu gewährleisten, wird die Förderleistung der Förderpumpe 17 durch die Steuereinheit 19 in Abhängigkeit der von den Temperatursensoren 12 und 18 abgegebenen Temperaturwerte gesteuert. Sofern diese Temperaturdifferenz unter einen vorbestimmten Wert absinkt, wird durch die Steuereinheit 19 die Förderleistung der Pumpe 17 vermindert. Da somit der Wärmekollektor 10 in der Zeiteinheit von einer geringeren Menge an Trägermedium durchströmt wird, nimmt dieses mehr Wärme auf, wodurch die Temperaturdifferenz vergrößert wird. Sofern demgegenüber die Temperaturdifferenz den vorbestimmten Wert überschreitet, wird die Förderleistung der Förderpumpe 17 vergrößert, wodurch das Trägermedium im Kollektor 10 weniger Wärme aufnimmt. Hierdurch wird verhindert, dass vom Umweltkollektor 10 zu stark erwärmtes Trägermedium abgegeben wird.
Mittels des in der Leitung 11 vorgesehenen Mengenmessgerätes 13 wird die pro Zeiteinheit geförderte Menge an Trägermedium festgestellt. Sofern diese Menge unter einen vorgegebenen Wert absinkt, wird durch die Steuereinheit 19 die Förderung dieser Mindestmenge unabhängig von der Temperaturdifferenz aufrecht erhalten.

Beim Einschalten des Leitungskreises 1 wird vorerst das Trägermedium vom Umweltkollektor 10 über die Leitung 11, weiters durch das mittels des diesem zugeordneten Stellmotors M1 geöffnete Sperrventil des Mehrwegeventils 14 hindurch und über die Leitung 11a so lange im Kreis gefördert, bis das Trägermedium auf einen vorgegebenen Wert erwärmt worden ist. In weiterer Folge wird das im Mehrwegeventil 14 befindliche Sperrventil so gesteuert, dass die Verbindung von der Leitung 11 zur Leitung 11a gesperrt wird und die Strömung des Trägermediums von der Leitung 11 über das im Mehrwegeventil 14 befindliche Rückschlagventil in die Leitung 15 sowie in den Wärmetauscher 31 erfolgt. Hierauf wird die Förderpumpe 17 mit einer solchen Förderleistung betrieben, dass die Differenz der Temperaturen des in der Leitung 11a zum Umweltkollektor 10 strömenden Trägermediums und des vom Umweltkollektor 10 durch die Leitung 11 abströmenden Mediums etwa 20°C bis 30°C beträgt. Sofern diese Temperaturdifferenz, welche durch die Temperatursensoren 12 und 18 ermittelt wird, unterschritten wird, wird die Förderleistung der Förderpumpe 17 vermindert, sodass von dem im Umweltkollektor enthaltenen Trägermedium mehr Wärme aufgenommen wird. Sofern demgegenüber diese Temperaturdifferenz überschritten wird, wird die Förderleistung der Förderpumpe 17 vergrößert, wodurch im Umweltkollektor 10 vom Trägermedium weniger Wärme aufgenommen wird.

Durch den zweiten Leitungskreis 2, welcher eine dem Leitungskreis 1 analoge Wirkungsweise aufweist, wird der Pufferspeicher 30 vom Heizkessel 20 her mit erwärmtem Trägermedium versorgt. Auch hierbei wird beim Einschalten des Heizkessels 20 das im Mehrwegeventil 24 befindliche Sperrventil mittels des diesem zugeordneten Stellmotors M2 in eine solche Stellung gesteuert, dass das durch den Heizkessel 20 erwärmte Trägermedium mittels der Förderpumpe 27 durch die Leitung 21 und das Mengenmessgerät 23 zum Mehrwegeventil 24 und weiters durch die Leitung 21a so lange in den Heizkessel 20 zurückgefördert wird, bis im Heizkessel 20 eine Betriebstemperatur von z.B. 50 ° C erreicht worden ist.

In weiterer Folge wird das im Mehrwegeventil 24 befindliche Sperrventil mittels des diesem zugeordneten Motors M2 so umgesteuert, dass das im Heizkessel 20 erwärmte Trägermedium über die Leitung 21 zum Mehrwegeventil 24, über das in diesem befindliche Rückschlagventil und über die Leitung 25 in den Pufferspeicher 30 gefördert wird. Der Rückfluss aus dem Pufferspeicher 30 erfolgt über die Leitung 26, das Mehrwegeventil 24 und die Leitung 21a zum Heizkessel 20. Durch das Mengenmessgerät 23 wird gleichfalls eine Mindestförderung an Trägermedium ungeachtet der bestehenden Temperaturen gewährleistet.

Durch den Leitungskreis 4 wird der mindestens eine Verbraucher 5 mit Wärmeenergie versorgt. Da der Verbraucher 5 an Wärmeenergie als Niedertemperaturheizung, insbesondere als Flächen-, Boden-, Wand- oder Deckenheizung, ausgebildet ist, darf einerseits die Temperatur des Trägermediums in der zum Verbraucher 5 führenden Leitung 41 nur einen geringen Wert über der angestrebten Raumtemperatur aufweisen. Andererseits muss jedoch auch über die gesamten beheizten Flächen eine gleichmäßige Flächentemperatur gewährleistet werden. Hieraus ergibt es sich, dass die Differenz der Temperaturen in den Leitungen 41 und 44 einen Maximalwert von 2° C bis 3° C nicht überschreiten darf. Durch diese Art der Heizung wird der Vorteil erzielt, dass Trägermedium mit einem geringen Temperaturniveau, wie dieses durch Umweltkollektoren bzw. Erdspeicher zur Verfügung steht, für Heizungszwecke verwendet werden kann. Hierdurch kann auf Trägermedien mit einem hohen Temperaturniveau, welches durch Heizkessel oder Wärmepumpen erzeugt wird, verzichtet werden.

Im Leitungskreis 4 erfolgt der Umlauf des Trägermediums, welcher durch die Förderpumpe 42 bewirkt wird, vom Mehrwegeventil 37 über die Leitung 41 zu dem mindestens einen Verbraucher 5. Von diesem erfolgt der Rückfluss des Trägermediums über die Leitung 45 zu dem einen Querkanal im Mehrwegeventil 37 und über die Verbindungsleitung 45a zu dem anderen Querkanal im Mehrwegeventil 37 zur Leitung 41, wodurch der Leitungskreis 4 in sich geschlossen ist.
Die Wärmezufuhr erfolgt über die Leitung 35, wobei aus dem Pufferspeicher 30 her gefördertes Trägermedium mittels der Druckpumpe 36 über das im Mehrwegeventil 37 befindliche, durch den Motor M3 gesteuerte Regelventil in den Leitungskreis 4 eingespeist wird. Dabei wird die Menge des dem Leitungskreis 4 zugeführten Heizmediums im Mehrwegeventil 37 mittels des in diesem befindlichen Regelventils, welches durch den Motor M3 gesteuert wird, bestimmt.

Um dabei die erforderliche Heizleistung zu gewährleisten, besteht das Erfordernis, die Leistung der Förderpumpe 42 in Abhängigkeit von der durch die Temperatursensoren 43 und 46 ermittelten Differenz der Temperaturen des Trägermediums in der Leitung 41 zu dem mindestens einen Verbraucher 5 und in der Leitung 45 von dem mindestens einen Verbraucher 5 weg zu steuern.
Die Steuerung der angestrebten Differenz der Temperaturen des Trägermediums in den Leitungen 41 und 45 erfolgt durch die Temperatursensoren 43 und 46, deren Ausgangswerte an die Steuereinheit 48 abgegeben werden. Sofern diese Differenz einen unteren Grenzwert unterschreitet, bedeutet dies, dass in dem mindestens einen Verbraucher 5 zu wenig Wärmenergie abgegeben wird. Um die Abgabe an Wärmeenergie zu vergrößern, wird durch die Steuereinheit 48 die Förderleistung der Förderpumpe 42 vermindert, wodurch die Verweilzeit des Trägermediums in dem mindestens einen Verbraucher 5 verlängert wird und somit von diesem mehr Wärmeenergie abgegeben wird. Sofern jedoch keine höhere Abgabe von Wärme erfolgt, da diese nicht benötigt wird, wird das im Mehrwegeventil 32 befindliche Regelventil durch die Steuereinheit 48 so gesteuert, dass dem Leitungskreis 4 aus dem Pufferspeicher 30 weniger Wärmeenergie zugeführt wird.
Sofern demgegenüber die Differenz in den Temperaturen einen oberen Grenzwert überschreitet, bedeutet dies, dass der Wärmebedarf in dem mindestens einen Verbraucher 5 nicht gedeckt wird. Somit muss die Wärmezufuhr dadurch vergrößert werden, dass die Förderleistung der Förderpumpe 42 vergrößert wird. Die hiefür erforderliche Wärmeenergie wird dem Leitungskreis 4 mittels der Druckpumpe 36 aus dem Pufferspeicher 30 über die Leitung 35 und über das im Mehrwegeventil 37 befindliche Regelventil zugeführt.
Unter einer Druckpumpe wird eine solche Pumpe verstanden, welche auch betrieben werden kann, wenn keine Förderung erfolgt.

Durch das Mengenmessgerät 47 wird gewährleistet, dass die Menge des im Heizungskreis 4 strömenden Heizungsmediums einen unteren Grenzwert nicht unterschreitet.

Mittels des in der Leitung 41 weiters vorgesehenen Temperatursensors 44 wird gleichfalls die Temperatur des dem mindestens einen Verbraucher 5 zugeführten Trägermediums erfasst und durch den Außentemperatursensor 51 wird die Außentemperatur erfasst. Die Ausgangswerte dieser beiden Temperatursensoren 44 und 51 werden der Steuereinheit 49 zugeführt, durch welche die Druckpumpe 36 und das im Mehrwegeventil 37 befindliche Regelventil gesteuert werden. Bei einer hohen Au-ßentemperatur wird die Temperatur des Trägermediums in der Leitung 41 geringer gewählt als bei einer niedrigen Außentemperatur. Um dabei die Temperatur des Trägermediums in der Leitung 41 so weit anzuheben, dass der im mindestens einen Verbraucher 5 bestehende Wärmebedarf gedeckt wird, wird das im Mehrwegeventil 37 befindliche Regelventil durch den Motor M3 weiter geöffnet, wodurch mittels der Druckpumpe 36 in den Leitungskreis 4 mehr Wärmeenergie eingebracht wird.

## Patentansprüche

1. Heizungsanlage mit mindestens einer Wärmequelle, wie einem Wärmekollektor (10), einem Heizkessel (20) oder einem Erdspeicher, mit mindestens einem Verbraucher (5) an Wärmeenergie, insbesondere einer Boden-, Wand- oder Deckenheizung, und mit mindestens einer Förderpumpe (42), durch welche ein Trägermedium für die Wärmeenergie, insbesondere Wasser, von der Wärmequelle (10, 20) zu dem mindestens einen Verbraucher (5) an Wärmeenergie gefördert wird, **dadurch gekennzeichnet, dass** der zum Verbraucher (5) an Wärmeenergie führenden Leitung (41) und der vom Verbraucher (5) an Wärmeenergie wegführenden Leitung (45) je ein Temperatursensor (43, 46) zugeordnet ist, durch welche beiden Temperatursensoren (43, 46) die Temperaturen des Trägermediums in diesen beiden Leitungen (41, 45) erfasst werden und deren Ausgangsleitungen an eine Steuereinheit (48) gelegt sind, durch welche die Förderleistung der Förderpumpe (42) so gesteuert wird, dass die Differenz der Temperaturen des Trägermediums in der zu dem mindestens einen Verbraucher (5) führenden Leitung (41) und in der vom Verbraucher (5) wegführenden Leitung (45) auf einem vorgegebenen maximalen Wert von z.B. 2°C bis 3°C gehalten wird.

2. Heizungsanlage nach Patentanspruch 1, **dadurch gekennzeichnet, dass** im Leitungskreis (4) für den mindestens einen Verbraucher (5) an Wärmeenergie ein Mehrwegeventil (37) vorgesehen ist, durch welches dem Leitungskreis (4) für den Verbraucher (5) von der Wärmequelle (10, 20) her ein Trägermedium zuführbar ist.

3. Heizungsanlage nach einem der Patentansprüche 1 und 2, **dadurch gekennzeichnet, dass** dem Leitungskreis (4) für den mindestens einen Verbraucher (5) an Wärmeenergie eine zweite Steuereinheit (49) zugeordnet ist, an welche die Ausgänge eines weiteren der Vorlaufleitung (41) zugeordneten Temperatursensors (44) und eines Außentemperatursensors (51) gelegt sind, wobei ein Ausgang dieser zweiten Steuereinheit (49) an eine dem Mehrwegeventil (37) zugeordnete Stelleinrichtung (M3) gelegt ist.

4. Heizungsanlage nach Patentanspruch 3, **dadurch gekennzeichnet, dass** ein Ausgang der zweiten Steuereinrichtung (49) auch an eine in der von der Wärmequelle (10, 20) wegführenden Leitung (35) vorgesehene weitere Pumpe (36) gelegt ist.

5. Heizungsanlage nach einem der Patentansprüche 1 bis 4, **dadurch gekennzeichnet, dass** im Leitungskreis (4) des mindestens einen Verbrauchers (5) an Wärmeenergie ein Mengenmessgerät (47) vorgesehen ist, dessen Ausgang gleichfalls an die erste Steuereinrichtung (48) gelegt ist.

6. Heizungsanlage nach einem der Patentansprüche 1 bis 5, **dadurch gekennzeichnet, dass** zwischen der Wärmequelle (10, 20) und dem Leitungskreis (4) für den mindestens einen Verbraucher (5) an Wärmeenergie ein Speicher (30) für das Trägermedium vorgesehen ist.

7. Heizungsanlage nach Patentanspruch 6, **dadurch gekennzeichnet, dass** der Leitungskreis (1) des Umweltkollektors (10) an einen dem Speicher (30) für das Trägermedium zugeordneten Wärmetauscher (31) angeschlossen ist.

8. Heizungsanlage nach einem der Patentansprüche 1 bis 7, **dadurch gekennzeichnet, dass** den zur Wärmequelle (10, 20) und von dieser wegführenden Leitungen (11, 21; 11a, 21a) jeweils ein Temperatursensor (12, 18; 22, 28) zugeordnet sind, wobei die Ausgänge dieser Temperatursensoren (12, 18; 22, 28) an eine dritte Steuereinheit (19, 29) gelegt sind, durch welche eine in diesem Leitungskreis (1, 2) befindliche Förderpumpe (17, 27) derart gesteuert wird, dass die Differenz der Temperaturen des Trägermediums in der zur Wärmequelle führenden Leitung (11a, 21a) und in der von der Wärmequelle (10, 20) wegführenden Leitung (11, 21) einen vorgegebenen minimalen Wert von etwa 20 ° C bis 30 ° C beträgt.

9. Heizungsanlage nach einem der Patentansprüche 1 bis 8, **dadurch gekennzeichnet, dass** im Leitungskreis (1, 2) der Wärmequelle (10, 20) ein Mengenmessgerät (13, 23) vorgesehen ist, dessen Ausgangsleitung gleichfalls an die dritte Steuereinheit (19, 29) gelegt ist.

10. Heizungsanlage nach einem der Patentansprüche 1 bis 9, **dadurch gekennzeichnet, dass** im Speicher (30) ein Boiler (32) für die Erzeugung von erwärmtem Brauchwasser vorgesehen ist.
